# EUROPÄISCHE PATENTSCHRIFT

(11) **EP 1 700 747 B1**
(45) Veröffentlichungstag und Bekanntmachung des Hinweises auf die Patenterteilung: **08.10.2008**
(21) Anmeldenummer: 05005263.8
(22) Anmeldetag: 10.03.2005
(51) Int. Cl.: B60R 11/02

(54) **Einbaugerät mit abnehmbarem Dreh- und/oder Drücksteller**
Built-in apparatus with detachable turn and/or press control device
Appareil encastré avec dispositif de commande rotatif et/ou par pression amovible

(43) Veröffentlichungstag der Anmeldung: 13.09.2006
(73) Patentinhaber: Delphi Technologies, Inc., Troy, MI 48007 (US)
(72) Erfinder: Bienefeld, Axel, 90587 Obermichelbach (DE)
(74) Vertreter: Denton, Michael John

(56) Entgegenhaltungen:
- EP-A- 0 344 524
- EP-A- 0 863 052
- EP-A- 1 079 389
- EP-A- 1 285 819
- WO-A-20/04105262
- DE-A1- 10 313 741
- PATENT ABSTRACTS OF JAPAN Bd. 2002, Nr. 09, 4. September 2002 (2002-09-04) & JP 2002 149195 A (FUJITSU TEN LTD), 24. Mai 2002 (2002-05-24)

## Beschreibung

Die vorliegende Erfindung betrifft ein Einbaugerät für ein Kraftfahrzeug und einen dazugehörigen abnehmbaren Dreh- und/oder Drücksteller sowie ein Transportelement für diesen Dreh- und/oder Drücksteller.

Aus dem Stand der Technik sind Einbaugeräte, beispielsweise Autoradios oder Navigationssysteme, für Kraftfahrzeuge bekannt, bei denen einzelne Bedienelemente oder die gesamte Frontblende abgenommen werden können. Auf diese Weise wird ein gewisser Schutz vor Diebstahl erzielt, da einerseits das Einbaugerät ohne die Frontblende beziehungsweise ohne die abgenommenen Bedienelemente für einen potentiellen Dieb unbenutzbar ist, und andererseits vom Äußeren des Fahrzeugs aus nicht oder nur schwer erkennbar ist, was für ein Einbaugerät sich in dem Fahrzeug befindet. Ein Nachteil dieser bekannten Geräte ist allerdings, dass der Benutzer es im Allgemeinen als lästig empfindet, das abgenommene Bedienelement oder die abgenommene Frontblende mit sich zu führen, da diese Teile für ihn keinerlei Nutzen besitzen, wenn sie nicht an dem Einbaugerät montiert sind. Aus diesem Grund wird der Benutzer die Teile oft nicht demontieren, sondern im Fahrzeug belassen, wobei in diesem Fall natürlich kein Diebstahlschutz gegeben ist.

Aus der DE 103 13 741 A1 ist ein Einbaugerät, beispielsweise ein Autoradio, mit einem abnehmbaren Bedienteil bekannt. Das Bedienteil ist als Abspielgerät für gespeicherte Tonsignale ausgebildet, und kann, wenn es von dem Einbaugerät demontiert ist, als tragbares Radio, als MP3-Player oder Ähnliches dienen.

Die JP 2002-149195 offenbart ein Einbaugerät zum Abspielen gespeicherter Daten, welches mit einem abnehmbaren Dreh-/Drücksteller nach dem Oberbegriff des Anspruchs 1 versehen ist.

Aus der EP-A-1 285 819 ist ein Einbaugerät für ein Kraftfahrzeug bekannt, dessen Frontblende abnehmbar ist und einen Speicher aufweist. Die in diesem Speicher gespeicherten Daten können an das Einbaugerät übertragen werden oder von der als tragbares Wiedergabegerät verwendbaren Frontblende selbst wiedergegeben werden.

Es ist daher die Aufgabe der vorliegenden Erfindung, ein Einbaugerät mit einem abnehmbaren Dreh- und/oder Drücksteller nach dem Oberbegriff des Anspruchs 1 zur Verfügung zu stellen, welches einen zuverlässigen Diebstahlschutz und eine einfache und bequeme Möglichkeit zur Übertragung von Daten zu und von einem externen Gerät bietet.

Diese Aufgabe wird erfindungsgemäß dadurch gelöst, dass für das Einbaugerät für ein Kraftfahrzeug ein abnehmbarer Dreh- und/oder Drücksteller vorgesehen ist, der ein Speichermedium enthält und Kontaktelemente zum Kontaktieren des Einbaugerätes aufweist, über die in dem Speichermedium gespeicherte Daten übertragbar sind, und der zudem eine USB-Schnittstelle zum Anschließen an ein Gerät, insbesondere einen Personal Computer, aufweist.

Bei montiertem Dreh- und/oder Drücksteller kann das Einbaugerät auf das Speichermedium zugreifen, während es bei abgenommenem Dreh- und/oder Drücksteller nicht funktionsfähig ist.

Der erfindungsgemäße Dreh- und/oder Drücksteller besitzt somit mehrere Funktionen. Einerseits wird mit seiner Hilfe der gewünschte Diebstahlschutz realisiert, da das Einbaugerät bei abgenommenem Dreh- und/oder Drücksteller nicht funktionsfähig und somit für einen potenziellen Dieb uninteressant ist. Gleichzeitig dient der Dreh- und/oder Drücksteller aber auch als transportables Speicherelement und ersetzt somit sonstige Speicherelemente. Auf dem in dem Dreh- und/oder Drücksteller vorgesehenen Speichermedium können Musikdateien oder, falls es sich bei dem Einbaugerät um ein Navigationsgerät handelt, Kartenmaterial oder sonstige Daten gespeichert werden, die über die Kontaktelemente an das Einbaugerät übertragen werden können. Der Benutzer muss beim Verlassen des Fahrzeugs lediglich den Dreh- und/oder Drücksteller abnehmen, und hat damit das Einbaugerät gegen Diebstahl gesichert und ein transportables Speichermedium zur Hand, mit dessen Hilfe er Daten von und zu dem Einbaugerät übertragen kann. Er muss nur ein einziges, noch dazu vergleichsweise handliches, Teil mit sich führen, welches gleich mehrere Funktionen erfüllt. Die Wahrscheinlichkeit, dass der Benutzer das Demontieren des Dreh- und/oder Drückstellers vergisst oder aus Bequemlichkeit unterlässt ist deutlich geringer als bei den herkömmlichen demontierbaren Bedienelementen oder Frontblenden, die getrennt von dem Einbaugerät völlig nutzlos sind.

Des Weiteren gehört zu der vorliegenden Erfindung ein Transportelement für den abnehmbaren Dreh- und/oder Drücksteller mit einer Aufnahme, in der der Dreh- und/oder Drücksteller verrastbar ist. Ein solches Transportelement kann den abmontierten Dreh- und/oder Drücksteller und insbesondere dessen Kontaktelemente beim Transport schützen, es kann aber auch verschiedene Zusatzfunktionen aufweisen, auf die später näher eingegangen werden soll.

Vorteilhafte Ausführungsformen der Erfindung sind in den Unteransprüchen und der nun folgenden Beschreibung in Verbindung mit den beigefügten Figuren beschrieben.

Erfindungsgemäß weist der Dreh- und/oder Drücksteller eine Schnittstelle zum Anschließen an ein Gerät auf. Dabei handelt es sich um eine USB-Schnittstelle, aber auch andere Anschlüsse oder eine Schnittstelle zur drahtlosen Datenübertragung sind zusätzlich denkbar. Mit Hilfe dieser Schnittstelle können die auf dem Speichermedium in dem Dreh- und/oder Drücksteller gespeicherten Daten an ein externes Gerät, wie beispielsweise einen Computer, einen MP3-Player oder ein ähnliches Gerät, übertragen werden. Der Benutzer kann somit beispielsweise, falls das Einbaugerät in der Lage ist, Musikdateien, insbesondere MP3-Dateien, wiederzugeben, entsprechende Dateien von einem Computer, einem MP3-Player, einem Personal Digital Assistant, einem Mobiltelefon oder einem anderen Gerät auf das in dem erfindungsgemäßen Dreh- und oder Drücksteller vorgesehene Speichermedium überspielen. Wird der Dreh- und/oder Drücksteller an das Einbaugerät montiert, kann letzteres auf die Daten zugreifen und die gespeicherten Musikstücke abspielen.

Falls es sich bei dem Einbaugerät um ein Navigationsgerät handelt, können über die Schnittstelle beispielsweise Kartenmaterial, Updates für in dem Gerät gespeicherte Landkarten, zusätzliche Routeninformationen oder ähnliche Daten auf dem Speichermedium in dem Dreh- und/oder Drücksteller gespeichert werden, auf die das Einbaugerät bei montiertem Dreh- und/oder Drücksteller zugreifen kann.

Nach einer vorteilhaften Weiterbildung der Erfindung bildet der Dreh- und/oder Drücksteller selbst gemeinsam mit einer Lautsprecher- oder Kopfhörereinheit ein tragbares Gerät zur Wiedergabe von Audiodateien. Beispielsweise kann der Drücksteller eine Anschlussbuchse für Kopfhörer aufweisen und als MP3-Player ausgebildet sein. Eine solche Zusatzfunktion des Dreh- und/oder Drückstellers gibt dem Benutzer des Fahrzeugs eine zusätzliche Motivation, den Dreh- und/oder Drücksteller abzumontieren, wenn er das Fahrzeug verlässt, so dass der Diebstahlsschutz wesentlich zuverlässiger verwendet wird. Das Überspielen von Musikdateien von einem MP3-Player auf einen Speicher für das im Fahrzeug vorgesehene Einbaugerät und umgekehrt entfällt, und ein zusätzliches Gerät zur Wiedergabe von Audiodateien außerhalb des Fahrzeugs wird nicht mehr benötigt.

Die gleichen Vorteile ergeben sich, wenn der Dreh- und/oder Drücksteller gemeinsam mit dem Transportelement ein Gerät zur Wiedergabe von Audiodateien, beispielsweise einen MP3-Player, bildet. In diesem Fall können die viel Platz beanspruchenden Teile des Wiedergabegerätes, beispielsweise eine Batterie zur Stromversorgung, in dem Transportelement untergebracht werden, während der Dreh- und/oder Drücksteller selbst nur als Speicherelement für die abzuspielenden Audiodateien und als Betätigungselement für das Wiedergabegerät dient.

Vorzugsweise besitzt der Dreh- und/oder Drücksteller Rastelemente zum Verrasten in einer Aufnahme des Einbaugerätes. Dadurch wird ein fester Sitz des Dreh- und Drückstellers in der Aufnahme des Einbaugerätes gewährleistet.

Nach einer besonders vorteilhaften Ausführungsform der Erfindung dienen diese Rastelemente gleichzeitig als Kontaktelemente, entweder zum Übertragen von der in dem Speichermedium gespeicherten Information oder aber zum Übertragen eines die Stellung des Dreh- und/oder Drückstellers betreffenden Signals an das Einbaugerät. Die Doppelnutzung der Rastelemente als Kontaktelemente vereinfacht und verbilligt die Herstellung des Dreh- und/oder Drückstellers. Zudem wird der elektrische Kontakt auf diese Weise beim Einrasten des Dreh- und/oder Drückstellers in der Aufnahme des Einbaugerätes automatisch hergestellt.

Nach einer weiteren bevorzugten Ausführungsform der Erfindung können die gleichen Rastelemente, die zum Verrasten des Dreh- und/oder Drückstellers in einer Aufnahme des Einbaugerätes dienen, auch zum Verrasten des Dreh- und/oder Drückstellers in dem erfindungsgemäßen Transportelement verwendet werden. Zu diesem Zweck kann das erfindungsgemäße Transportelement entsprechende korrespondierende Rastausnehmungen in seiner für den Dreh- und/oder Drücksteller vorgesehenen Aufnahme aufweisen. Auf diese Weise wird das Design des Dreh- und/oder Drückstellers so einfach wie möglich gehalten, da sowohl zum Verrasten in dem Einbaugerät als auch zum Verrasten in dem Transportelement die gleichen Bauteile verwendet werden.

Nach einer aufgrund ihrer Einfachheit bevorzugten Ausführungsform der Erfindung besitzt der erfindungsgemäße Dreh- und/oder Drücksteller an seiner Rückseite elektrische Kontaktelemente zur Kontaktierung des Speichermediums. Beispielsweise können Kontaktfedern verwendet werden, die automatisch dazugehörige Kontakte in einer Aufnahme des Einbaugerätes kontaktieren, sobald der Dreh- und/oder Drücksteller in die Aufnahme eingesetzt ist. Diese elektrischen Kontaktelemente können identisch ausgebildet sein wie ebenfalls an der Rückseite des Dreh- und/oder Drückstellers vorgesehene Kontaktfedern, die dazu dienen, eine Information über die Stellung des Dreh- und oder Drückstellers an das Einbaugerät zu übertragen.

Das erfindungsgemäße Einbaugerät kann zusätzlich zu der Diebstahlsicherung allein durch das Abnehmen des zur Betätigung des Gerätes notwendigen Dreh- und oder Drückstellers eine elektronische Diebstahlschutzvorrichtung besitzen, welche durch das Demontieren des Drückstellers aktiviert wird. Beispielsweise kann eine in dem Speicher des Dreh- und/oder Drücksteller gespeicherte ID zu einer Identifikation eines zu dem Einbaugerät gehörigen Dreh- und/oder Drückstellers dienen. Wenn ein fremder Dreh- und/oder Drücksteller mit einer anderen ID montiert wird, wird dieser von dem Einbaugerät als nicht zu dem Gerät gehörig erkannt, und das Gerät lässt sich nicht einschalten. Auf diese Weise wird eine noch zuverlässigere Diebstahlssicherung realisiert. Es kann insbesondere verhindert werden, dass ein Dieb das Einbaugerät durch das Einbauen eines nicht zu dem Gerät gehörigen Dreh- bzw. Drückstellers wieder funktionstüchtig macht.

Das Speichermedium in dem Dreh- und/oder Drücksteller kann zwar ein Read-Only-Speicher sein, vorzugsweise handelt es sich aber um einen wiederbeschreibbaren Speicher. In diesem Fall ist es besonders vorteilhaft, wenn das Einbaugerät in der Lage ist, das Speichermedium zu beschreiben. So können beispielsweise auf Wunsch des Benutzers im Radio gesendete Musikstücke als MP3-Datei auf dem Speichermedium gespeichert werden, oder es können, falls es sich bei dem Einbaugerät um ein Navigationssystem handelt, Fahrtroutendaten auf dem Speichermedium gespeichert werden, welche dann später an einen Computer übertragen und mit dessen Hilfe dargestellt, ausgewertet und archiviert werden können.

Das Transportelement, welches den Dreh- und/oder Drücksteller aufnimmt, kann zusätzlich zu dem bereits erwähnten Schutz des Dreh- und/oder Drückstellers vor mechanischer Beschädigung und Feuchtigkeit noch weitere Funktionen aufweisen. Insbesondere kann das Transportelement als Adapter zum Anschließen des demontierten Drückstellers und somit des Speichermediums an ein externes Gerät ausgebildet sein. Denkbar ist beispielsweise eine Ausführung als Adapter zum Anschließen an eine USB-Buchse, das heißt mit einem außenseitig an dem Transportelement vorgesehenen USB-Stecker. Das Transportelement bildet dann gemeinsam mit dem in seiner Aufnahme eingesetzten Dreh- und/oder Drücksteller einen USB-Stick. Die Übertragung von Daten von einem Personal Computer an das Speichermedium in dem Dreh- und/oder Drücksteller und umgekehrt ist dadurch besonders einfach und mit hoher Übertragungsrate möglich.

Das Transportelement kann im Übrigen mit einem Schlüsselring, einem Karabinerhaken oder einem sonstigen Befestigungselement versehen sein, so dass es beispielsweise an einem Schlüsselbund befestigt werden kann. Der Dreh- und/oder Drücksteller kann dann, wenn er in das Transportelement eingesetzt ist, sicher und bequem transportiert werden.

Im Folgenden wird die Erfindung unter Bezugnahme auf die beigefügten Figuren rein beispielhaft beschrieben. Dabei zeigen die Figuren im Einzelnen:
- Fig. 1:: ein Einbaugerät mit montiertem Dreh- und/oder Drücksteller;
- Fig. 2A:: eine perspektivische Ansicht eines Dreh- und/oder Drückstellers von vorne;
- Fig. 2B:: eine perspektivische Ansicht des Drückstellers aus Fig. 2A von der Rückseite aus gesehen;
- Fig. 3:: ein Ausführungsbeispiel eines Transportelementes mit einem darin eingesetzten Dreh- und/oder Drücksteller in perspektivischer Darstellung; und
- Fig. 4:: ein anderes Ausführungsbeispiel eines Transportelementes für einen erfindungsgemäßen Dreh- und/oder Drücksteller in perspektivischer Darstellung.

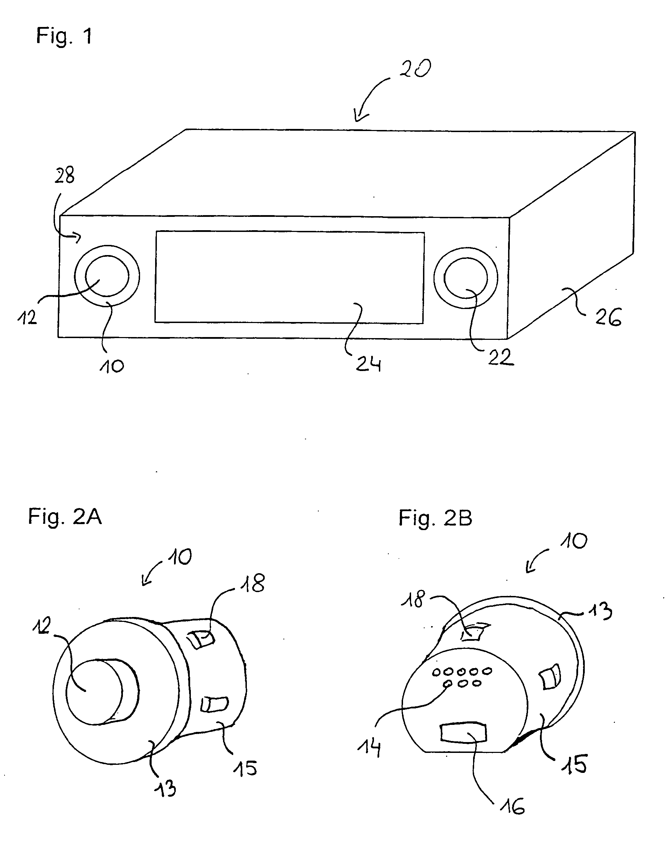

Fig. 1 zeigt ein Einbaugerät 20 von vorne gesehen in perspektivischer Darstellung. Bei dem Einbaugerät 20 handelt es sich um ein Radio zum Einbau in ein Kraftfahrzeug. Das quaderförmige Gehäuse 26 des Einbaugerätes 20 schließt an seiner Vorderseite mit einer Frontblende 28 ab, in deren Mitte sich ein Display 24 befindet. Rechts und links des Displays 24 sind zwei Dreh- und Drücksteller 10, 22 angebracht. Bei dem in der Figur rechts dargestellten Dreh- und Drücksteller 22 handelt es sich um ein klassisches Bedienelement, welches nicht abnehmbar ist. Der äußerlich gleich gestaltete Dreh- und Drücksteller 10 hingegen ist abnehmbar und in den Fig. 2A und 2B separat dargestellt.

Das in Fig. 1 dargestellte Einbaugerät 20 kann ohne den unter anderem zum Einschalten des Gerätes 20 dienenden Dreh- und Drücksteller 10 nicht betätigt werden, so dass bereits durch dessen Entnahme eine Diebstahlssicherung realisiert ist. Zusätzlich kann aber eine elektronische Diebstahlssicherung vorgesehen sein, welche aktiviert wird, sobald der Dreh- und Drücksteller 10 demontiert wird und deaktiviert wird, sobald er wieder in die dazu vorgesehene Aufnahme an dem Einbaugerät 20 eingesetzt wird. Das Einbaugerät erkennt den zu ihm gehörigen Dreh- und Drücksteller an der in dessen Speicher gespeicherten ID. Ein baugleicher Dreh- und Drücksteller mit einer anderen ID wird als fremd erkannt, und die Diebstahlsicherung bleibt bei der Montage eines solchen nicht zu dem Gerät gehörigen Dreh- und Drückstellers aktiviert.

Die bei in das Einbaugerät 20 eingebautem Dreh- und Drücksteller 10 sichtbare Frontfläche 13 des Dreh- und Drückstellers 10 ist kreisförmig, wobei in der Mitte dieser Frontfläche 13 eine ebenfalls kreisrunde und über die Frontfläche 13 vorstehende Griffzone 12 angeformt ist, welche das Drehen der scheibenartigen Frontfläche erleichtert. Durch ein Drehen des aus dem Einbaugerät 20 ragenden Teils des Dreh- und Drückstellers 10, das heißt der scheibenartigen Frontfläche 13 mit der vorstehenden Griffzone 12, kann beispielsweise die Lautstärke des Radios geregelt werden, während ein Eindrücken des Dreh- und Drückstellers ein Ein- beziehungsweise Ausschalten bewirkt.

Hinter der scheibenartigen Frontfläche 13 sitzt ein im Wesentlichen zylindrischer Korpus 15, in dessen Innerem sich unter Anderem ein Speichermedium befindet. Wie man in Fig. 2B erkennt, ist der Korpus 15 nicht völlig zylindrisch, sondern an seiner Unterseite etwas abgeflacht. Der Korpus 15 kann vollständig in das Gehäuse 26 des Einbaugerätes 20 in eine dafür vorgesehene Aufnahme eingesetzt werden. Die Abflachung an der Unterseite des Korpus 15 dient dabei als Verdrehsicherung. Außen an dem Korpus 15 sind in gleichmäßigen Abständen mehrere Rastelemente 18 vorgesehen, welche als metallische Federkontakte ausgebildet sind und somit eine Doppelfunktion erfüllen. Einerseits verrasten sie beim Einsetzen des Dreh- und Drückstellers 10 in der dazu vorgesehenen Aufnahme des Gehäuses 26 mit komplementären Rastausnehmungen, andererseits stellen sie eine elektrisch leitende Verbindung zu dem Einbaugerät 20 her, über die unter anderem Strom zur Beleuchtung des Dreh- und Drückstellers übertragen werden kann.

An der Rückseite des Dreh- und Drückstellers sind, wie in Fig. 2B zu erkennen ist, oben Kontaktfedern 14 vorgesehen, welche entsprechende Kontakte in der bereits erwähnten Aufnahme des Einbaugerätes 20 kontaktieren. Eine untere Reihe von Kontaktfedern 14 dient zur Übertragung von Daten, die auf dem im Inneren des Dreh- und Drückstellers 10 vorgesehenen Speichermedium gespeichert sind, an das Einbaugerät 20. Umgekehrt können zum Wiederbeschreiben des Speichermediums auch Daten von dem Einbaugerät 20 an das Speichermedium übertragen werden. Die obere Reihe von Kontaktfedern 14 dient zur Übertragung einer Information über die Stellung des Dreh- und Drückstellers, beispielsweise von einem Inkrementalgeber. Unterhalb dieser Kontaktfedern 14 ist zudem eine USB-Schnittstelle 16 in Form einer Anschlussbuchse vorgesehen. Diese hat keinerlei Funktion, wenn der Dreh- und Drücksteller 10 in dem Einbaugerät 20 eingesetzt ist, bei demontiertem Dreh- und/oder Drücksteller 10 ermöglicht sie aber ein Anschließen desselben über ein USB-Kabel an einen Computer oder ein anderes externes Gerät, so dass die in dem Speichermedium in dem Dreh- und Drücksteller 10 gespeicherten Daten an ein solches externes Gerät übertragen werden können.

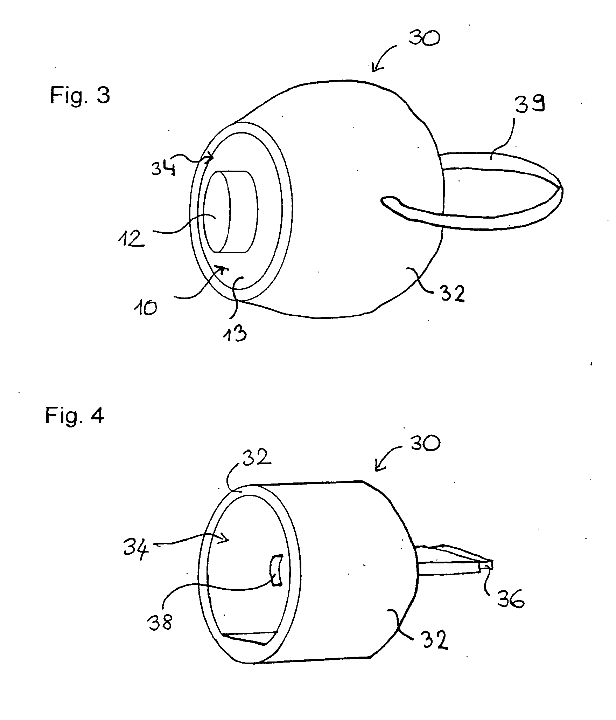

In den Fig. 3 und 4 sind zwei verschiedene Ausführungsformen eines zu dem Dreh- und Drücksteller 10 gehörigen Transportelementes 30 dargestellt. Das in der Fig. 3 dargestellte Transportelement 30 besitzt ein annähernd kugelförmiges Gehäuse 32 und eine im Wesentlichen zylindrische Aufnahme 34, in die der Dreh- und Drücksteller 10 aus den Fig. 2A und 2B passgenau eingesetzt werden kann, wie es in Fig. 3 dargestellt ist. Nicht nur der Korpus 15 des Dreh- und Drückstellers 10, sondern auch dessen Frontfläche 13 ist vollständig in der Aufnahme 34 des Transportelementes 30 aufgenommen. Das in Fig. 3 dargestellte Transportelement 30 dient dem bequemen und sicheren Transport des aus dem Einbaugerät 20 entnommenen Dreh- und Drückstellers 10. An der der Aufnahme 34 gegenüberliegenden Rückseite des Transportelementes 30 ist ein Metallring 39 angebracht, welcher beispielsweise an einem Schlüsselbund befestigt werden kann, so dass das Transportelement 30 alleine oder mit eingesetztem Dreh- und Drücksteller 10 bequem transportiert werden kann. Das Innere der Aufnahme 34, welches in Fig. 3 nicht zu erkennen ist, ist ebenso wie bei der in der Fig. 4 dargestellten Ausführungsform des erfindungsgemäßen Transportelementes 30 mit Rastausnehmungen 38 versehen, welche zu den Rastelementen 18 an dem Korpus 15 des Dreh- und Drückstellers 10 passen.

Das in Fig. 4 dargestellte Transportelement 30 besitzt eine zylindrische Grundform, dessen Kontur nur unwesentlich von der Außenkontur des Korpus 15 des Dreh- und Drückstellers 10 abweicht. Dadurch ist eine besonders platzsparende Halterungs- bzw. Transportmöglichkeit für den Dreh- und Drücksteller 10 realisiert. Das Gehäuse 32 des Transportelementes 30 besteht also im Wesentlichen aus einer zylindrischen Wand und einer Rückwand, welche der Öffnung der Aufnahme 34 für den Dreh- und Drücksteller 10 gegenüberliegt. Die Form der Aufnahme 34 ist komplementär zu der Außenkontur des Korpus 15 des Dreh- und Drückstellers 10, das heißt die Aufnahme 34 ist im Wesentlichen zylindrisch mit einer Abflachung, die der Abflachung des Korpus 15 entspricht. Der Korpus 15 kann also passgenau in die Aufnahme 34 eingesetzt werden, wobei die Frontfläche 13, die bei in das Einbaugerät 20 eingesetztem Dreh- und Drücksteller 10 über die Frontblende 28 des Einbaugerätes 20 übersteht, hier ebenfalls außerhalb der Aufnahme 34 liegt. Zum Verrasten des Dreh- und Drückstellers 10 in der Aufnahme 34 dienen Rastausnehmungen 38, welche mit den Rastelementen 18 außen an dem Korpus 15 des Dreh- und/oder Drückstellers 10 zusammenwirken. An der Rückwand der Aufnahme 34 sind in Fig. 4 nicht erkennbare Kontaktelemente vorgesehen, welche die Kontaktfedern 14 auf der Rückseite des Dreh- und Drückstellers 10 kontaktieren, wenn dieser 10 in der Aufnahme 34 verrastet ist. An der Rückwand des Gehäuses 32 des Transportelementes 30 ist außen ein USB-Stecker 36 angebracht, welcher in eine USB-Buchse an einem Computer oder einem sonstigen Gerät eingesteckt werden kann. Über die bereits erwähnten Kontaktelemente an der Rückwand der Aufnahme 34, die mit den Kontaktelementen 14 an der Rückseite des Dreh- und Drückstellers 10 zusammenwirken, wird eine Verbindung zwischen dem in dem Dreh- und Drücksteller 10 vorgesehenen Speichermedium und dem USB-Stecker 36 hergestellt, so dass die Daten, welche auf dem Speichermedium gespeichert sind, über den USB-Stecker 36 an ein externes Gerät übertragen werden können. Das Transportelement 30 bildet somit gemeinsam mit dem Dreh- und Drücksteller 10 einen USB-Stick, der zum einfachen Transport der in dem Speichermedium des Dreh- und Drückstellers 10 gespeicherten Daten und zur Übertragung dieser Daten an einen Computer oder ein anderes Gerät mit USB-Anschluss verwendet werden kann. D10123PEP- Cs/Ie/ho

### Bezugszeichenliste

- 10: Dreh- und Drücksteller
- 12: Griffzone
- 13: Frontfläche des Dreh- und Drückstellers
- 14: Kontaktfedern
- 15: Korpus des Dreh- und Drückstellers
- 16: USB-Schnittstelle
- 18: Rastelemente
- 20: Einbaugerät
- 22: nicht abnehmbarer Dreh- und Drücksteller
- 24: Display
- 26: Gehäuse des Einbaugeräts
- 28.: Frontblende des Einbaugeräts
- 30: Transportelement
- 32: Gehäuse des Transportelementes
- 34: Aufnahme für den Dreh- und Drücksteller
- 36: USB-Stecker
- 38: Rastausnehmung
- 39: Metallring

## Patentansprüche

1. Abnehmbarer Dreh- und/oder Drücksteller (10) für ein Einbaugerät (20) in einem Kraftfahrzeug, der ein Speichermedium enthält und Kontaktelemente (14) zum Kontaktieren des Einbaugeräts (20) aufweist, über die in dem Speichermedium gespeicherte Daten übertragbar sind,
**dadurch gekennzeichnet,**
**dass** er eine USB-Schnittstelle (16) zum Anschließen an ein Gerät, insbesondere einen Personal Computer, aufweist.

2. Dreh- und/oder Drücksteller (10) nach Anspruch 1,
**dadurch gekennzeichnet,**
**dass** er gemeinsam mit einer Lautsprecher- oder Kopfhörereinheit ein tragbares Gerät zur Wiedergabe von Audiodateien bildet.

3. Dreh- und/oder Drücksteller (10) nach Anspruch 1 oder 2,
**dadurch gekennzeichnet,**
**dass** er Rastelemente (18) zum Verrasten in einer Aufnahme des Einbaugeräts (20) aufweist.

4. Dreh- und/oder Drücksteller (10) nach Anspruch 3,
**dadurch gekennzeichnet,**
**dass** die Rastelemente (18) zudem Kontaktelemente zum Kontaktieren des Einbaugerätes (20) bilden.

5. Dreh- und/oder Drücksteller (10) nach zumindest einem der vorstehenden Ansprüche,
**dadurch gekennzeichnet,**
**dass** dieser an seiner Rückseite elektrische Kontaktelemente (14) zur Kontaktierung des Speichermediums aufweist.

6. Einbaugerät für ein Kraftfahrzeug (20) mit einem abnehmbaren Dreh- und/oder Drücksteller (10) nach zumindest einem der vorstehenden Ansprüche, wobei das Einbaugerät (20) bei montiertem Dreh- und/oder Drücksteller (10) auf das Speichermedium zugreifen kann und bei abgenommenem Dreh- und/oder Drücksteller (10) nicht funktionsfähig ist.

7. Einbaugerät (20) nach Anspruch 6,
**dadurch gekennzeichnet,**
**dass** es eine elektronische Diebstahlschutzvorrichtung aufweist, die beim Abnehmen des Dreh- und/oder Drückstellers (10) automatisch aktiviert und beim Montieren des Dreh- und/ oder Drückstellers (10) automatisch deaktiviert wird.

8. Einbaugerät (20) nach Anspruch 6 oder 7,
**dadurch gekennzeichnet,**
**dass** das Speichermedium durch das Einbaugerät (20) beschreibbar ist.

9. Einbaugerät (20) nach einem der Ansprüche 6 bis 8 sofern abhängig von Anspruch 3,
**dadurch gekennzeichnet,**
**dass** es eine Aufnahme für den Dreh- und/oder Drücksteller (10) aufweist, und dass die Rastelemente (18) mit korrespondierenden Rastausnehmungen in der Aufnahme zusammenwirken.

10. Transportelement (30) für einen Dreh- und/oder Drücksteller nach zumindest einem der Ansprüche 1 bis 5, das eine Aufnahme (34) aufweist, in der der Dreh- und/oder Drücksteller (10) verrastbar ist.

11. Transportelement (30) nach Anspruch 10,
**dadurch gekennzeichnet,**
**dass** es als Adapter zum Anschließen des Speichermediums des Dreh- und oder/ Drückstellers (10) an eine externe Schnittstelle ausgebildet ist, wobei insbesondere außenseitig an dem Transportelement (30) ein USB-Stecker (36) vorgesehen ist.

12. Transportelement (30) nach Anspruch 10 oder 11,
**dadurch gekennzeichnet,**
**dass** es gemeinsam mit dem Dreh- und oder Drücksteller (10) und gegebenenfalls mit einer Lautsprecher- oder Kopfhörereinheit ein tragbares Gerät zur Wiedergabe von Audiodateien bildet.

13. Kombination aus einem Transportelement (30) nach einem der Ansprüche 10 bis 12 und einem in der Aufnahme (34) des Transportelements (30) lösbar verrasteten Dreh- und/oder Drücksteller (10) nach zumindest einem der Ansprüche 1 bis 5.

14. Kombination nach Anspruch 13 sofern abhängig von Anspruch 3,
**dadurch gekennzeichnet,**
**dass** die Rastelemente (18) mit korrespondierenden Rastausnehmungen (38) in der Aufnahme (34) des Transportelementes (30) zusammenwirken.

## Claims

1. Detachable turn and/or press control device (10) for a built-in apparatus (20) in a motor vehicle, containing a data carrier and has contact elements (14) for contacting the built-in apparatus (20), via which the data stored on the data carrier is transferable, **characterised in that** it has a USB-interface (16) for connection to an apparatus, particularly a Personal Computer.

2. Turn and/or press control device (10) according to Claim 1, **characterised in that** together with a loudspeaker and headphone unit it forms a portable apparatus for the playback of audio files.

3. Turn and/or press control device (10) according to Claim 1 or 2, **characterised in that** it has engaging elements (18) for engaging in a reception of the built-in apparatus (20).

4. Turn and/or press control device (10) according to Claim 3, **characterised in that** the engaging elements (18) additionally form contact elements for contacting the built-in apparatus (20).

5. Turn and/or press control device (10) according to at least one of the preceding claims, **characterised in that** on its rear side it has electrical contact elements (14) for contacting the data carrier.

6. Built-in apparatus for a motor vehicle (20) with a detachable turn and/or press control device (10) according to at least one of the preceding claims, wherein the built-in apparatus (20) can, with the turn and/or press control (10) mounted, access the data carrier and is not operable with the turn and/or press control (10) detached.

7. Built-in apparatus (20) according to Claim 6, **characterised in that** it has an electronic theft protection device, which is automatically activated when detaching the turn and/or press control device (10) and is automatically deactivated when mounting the turn and/or press control device (10).

8. Built-in apparatus (20) according to Claim 6 or 7, **characterised in that** the data carrier can be recorded on by the built- in apparatus (20).

9. Built-in apparatus (20) according to one of the Claims 6 to 8 provided that it is dependent on Claim 3, **characterised in that** it has a reception for the turn and/or press control device (10) and that the engaging elements (18) interact with corresponding engaging recesses in the reception.

10. Transport element (30) for a turn and/or press control device according to at least one of the Claims 1 to 5, which has a reception (34) into which the turn and/or press control device (10) can be engaged.

11. Transport element (30) according to Claim 10, **characterised in that** it is formed as an adapter for connection of the data carrier of the turn and/or press control device (10) to an external interface, wherein especially a USB-plug (36) is provided on the outside of the transport element (30).

12. Transport element (30) according to Claim 10 or 11, **characterised in that** it forms together with the turn and/or press control device (10) and possibly with a loudspeaker or headphone unit a portable apparatus for playback of audio files.

13. Combination of a transport element (30) according to one of the Claims 10 to 12 and a turn and/or press control device (10) according to at least one of the Claims 1 to 5 detachably engaged in the reception (34) of the transport element (30).

14. Combination according to Claim 13 if it is dependent on Claim 3, **characterised in that** the engaging elements (18) interact with corresponding engaging recesses (38) in the reception (34) of the transport element (30).

## Revendications

1. Dispositif amovible de commande par rotation et/ou par pression pour un appareil encastré (20) dans un véhicule automobile qui comprend un support de mémoire et qui présente des éléments de contact (14) pour mettre en contact l'appareil encastré (20), qui permettent de transmettre des données mémorisées dans le support de mémoire,
**caractérisé en ce que**
il présente une interface USB (16) pour le branchement à un appareil, en particulier à un ordinateur personnel.

2. Dispositif amovible de commande par rotation et/ou par pression selon la revendication 1,
**caractérisé en ce que**
il constitue, conjointement avec une unité haut-parleur ou écouteur, un appareil portable pour la restitution de fichiers audio.

3. Dispositif amovible de commande par rotation et/ou par pression selon la revendication 1 ou 2,
**caractérisé en ce que**
il présente des éléments d'enclenchement (18) pour s'enclencher dans un logement de l'appareil encastré (20).

4. Dispositif amovible de commande par rotation et/ou par pression selon la revendication 3,
**caractérisé en ce que**
les éléments d'enclenchement (18) constituent en outre des éléments de contact pour mettre en contact l'appareil encastré (20).

5. Dispositif amovible de commande par rotation et/ou par pression selon l'une au moins des revendications précédentes,
**caractérisé en ce que**
celui-ci comprend sur son côté postérieur des éléments de contact électriques (14) pour mettre en contact le support de mémoire.

6. Appareil encastré pour un véhicule automobile (20) comportant un dispositif amovible de commande par rotation et/ou par pression (10) selon l'une au moins des revendications précédentes, dans lequel l'appareil encastré (20) peut accéder au support de mémoire lorsque le dispositif amovible de commande par rotation et/ou par pression (10) est monté, et n'est pas opérationnel lorsque le dispositif amovible de commande par rotation et/ou par pression (10) est enlevé.

7. Appareil encastré (20) selon la revendication 6,
**caractérisé en ce que**
il comprend un dispositif électronique de protection antivol qui est activé automatiquement lors de l'enlèvement du dispositif amovible de commande par rotation et/ou par pression (10) et qui est désactivé automatiquement lors du montage du dispositif amovible de commande par rotation et/ou par pression (10).

8. Appareil encastré (20) selon la revendication 6 ou 7,
**caractérisé en ce que**
le support de mémoire est réinscriptible par l'appareil encastré (20).

9. Appareil encastré (20) selon l'une des revendications 6 à 8 prises en dépendance de la revendication 3,
**caractérisé en ce que**
il comprend un logement pour le dispositif amovible de commande par rotation et/ou par pression (10), et **en ce que** les éléments d'enclenchement (18) coopèrent avec des évidements d'enclenchement correspondants dans le logement.

10. Elément de transport (30) pour un dispositif amovible de commande par rotation et/ou par pression selon l'une au moins des revendications 1 à 5, qui présente un logement (34) dans lequel peut s'enclencher dispositif amovible de commande par rotation et/ou par pression (10).

11. Elément de transport (30) selon la revendication 10,
**caractérisé en ce que**
il est réalisé à titre d'adaptateur pour connecter le support de mémoire du dispositif amovible de commande par rotation et/ou par pression (10) à une interface externe, une fiche USB (36) étant prévue en particulier du côté extérieur sur l'élément de transport (30).

12. Elément de transport (30) selon la revendication 10 ou 11,
**caractérisé en ce que**
il constitue, conjointement avec le dispositif amovible de commande par rotation et/ou par pression (10) et le cas échéant avec une unité haut-parleur ou écouteur, un appareil portable pour la restitution de fichiers audio.

13. Combinaison d'un élément de transport selon l'une des revendications 10 à 12 et d'un dispositif amovible de commande par rotation et/ou par pression (10) selon l'une au moins des revendications 1 à 5, enclenché de façon amovible dans le logement (34) de l'élément de transport (30).

14. Combinaison selon la revendication 13 prise en dépendance de la revendication 3,
**caractérisée en ce que**
les éléments d'enclenchement (18) coopèrent avec des évidements d'enclenchement correspondants (38) dans le logement (34) de l'élément de transport (30).
